# EUROPÄISCHE PATENTANMELDUNG

(11) **EP 0 878 350 A2**
(43) Veröffentlichungstag der Anmeldung: **18.11.1998**
(21) Anmeldenummer: 98108201.9
(22) Anmeldetag: 06.05.1998
(51) Int. Cl.: B60P 1/44

(54) **Faltbare Hubladebühne**

(30) Priorität: 13.05.1997 DE 19719813
(71) Anmelder: Bär, Gerd, 74078 Heilbronn (DE)
(72) Erfinder: Bär, Gerd, 74078 Heilbronn (DE)
(74) Vertreter: KOHLER SCHMID + PARTNER

(57) **Zusammenfassung**

Bei einer Hubladebühne (1) für ein Fahrzeug mit einer faltbaren Plattform (4), die entfaltet aus einer auf den Boden (6) aufsetzenden unteren Arbeitsstellung in eine bündig mit einer Ladefläche (8) des Fahrzeugs verlaufende obere Arbeitsstellung mittels eines Parallelogrammantriebs (5) anhebbar ist, welcher eine Hubschwinge (9) in unterer Parallelogrammhälfte und einen Zuglenker (10) in oberer Parallelogrammhälfte aufweist, wobei die Plattform (4) an der Hubschwinge (9) in einem ersten Gelenkpunkt (11) und an dem Zuglenker (10) in einem zweiten Gelenkpunkt (10) schwenkbar gelagert ist und um den ersten Gelenkpunkt (11) gefaltet aus der unteren Arbeitsstellung durch Anheben der Hubschwinge (9) in eine Ruhestellung unter das Niveau der Ladefläche (8) schwenkbar ist, liegt in der oberen Arbeitsstellung der Plattform (4), gesehen in Vorwärtsfahrtrichtung (22) des Fahrzeugs, der erste Gelenkpunkt (11) unterhalb eines die Lagerfläche (8) bildenden Ladebodens (3) und vor einer hinteren Ladekante (23) des Ladebodens (3), der zweite Gelenkpunkt (12) hinter dem ersten Gelenkpunkt (11), vorzugsweise hinter der Ladekante (23) und die Ladefläche (7) der Plattform (4) unterhalb des zweiten Gelenkpunkts (12) und oberhalb des ersten Gelenkpunkts (11). Diese faltbare Hubladebühne (1) kommt ohne an die Plattform speziell angepaßte und an den Ladeaufbau anzubauende Abschlußprofile aus.

## Beschreibung

Die vorliegende Erfindung betrifft eine Hubladebühne für ein Fahrzeug mit einer faltbaren Plattform, die entfaltet aus einer auf den Boden aufsetzenden unteren Arbeitsstellung in eine bündig mit einer Ladefläche des Fahrzeugs verlaufende obere Arbeitsstellung mittels eines Parallelogrammantriebs anhebbar ist, welcher eine Hubschwinge oder einen Tragarm in unterer Parallelogrammhälfte und einen Zuglenker in oberer Parallelogrammhälfte aufweist, wobei die Plattform an der Hubschwinge in einem ersten Gelenkpunkt und an dem Zuglenker in einem zweiten Gelenkpunkt schwenkbar gelagert ist und um den ersten Gelenkpunkt gefaltet aus der unteren Arbeitsstellung durch Anheben der Hubschwinge in eine Ruhestellung unter das Niveau der Ladefläche schwenkbar ist.

Eine derartige faltbare Hubladebühne ist beispielsweise durch die Hubladebühne "Flipaway Liftgate FSL Series" der Fa. Waltco Truck Eguipment Co., USA bekanntgeworden.

Bei faltbaren Hubladebühnen wird in der unteren Arbeitsstellung der Plattform zunächst die Plattformspitze von Hand umgelegt und dann dieses Plattformpaket um einen Gelenk- oder Drehpunkt von Hand verschwenkt. Durch Betätigen der Funktion "Heben der Plattform" wird über einen dazu vorgesehenen Parallelogrammantrieb das gesamte Plattformpaket angehoben, weiter verschwenkt und durch Eigengewicht und Federkraft in eine Ruhestellung unter das Niveau der Ladefläche gefaltet.

Bei der bekannten faltbaren Waltco-Hubladebühne bildet jeweils ein Zugarm die obere Parallelogrammhälfte und eine Hubschwinge die untere Parallelogrammhälfte des Parallelogrammantriebs. Die Plattform ist am Zugarm im oberen Parallelogrammpunkt und an der Hubschwinge im unteren Parallelogrammpunkt angelenkt und um letzteren als Plattformpaket auch verschwenkbar. Damit dieses bekannte System funktioniert, ist allerdings am Aufbauende des Fahrzeugs ein besonderes Heckabschlußprofil vorzusehen, welches hinter den Ladeaufbau angebaut wird.

Dieses Heckabschlußprofil führt zu einer aufgesetzten Optik, und der Anbau an den Ladeaufbau ist insbesondere bei isolierten Aufbauten sehr kostenaufwendig. Außerdem stehen Bauteile der bekannten faltbaren Hubladebühne über das Fahrzeugende hinaus, wodurch beim Anfahren an Rampen zuerst Berührungen mit der Hubladebühne auftreten können, welche zu Schäden führen.

Es ist daher die Aufgabe der vorliegenden Erfindung, eine faltbare Hubladebühne der eingangs genannten Art derart weiterzubilden, daß sie ohne ein an die Plattform speziell angepaßtes und an den Ladeaufbau anzubauendes Abschlußprofil auskommen kann.

Diese Aufgabe wird erfindungsgemäß dadurch gelöst, daß in der oberen Arbeitsstellung der Plattform, gesehen in Vorwärtsfahrtrichtung des Fahrzeugs, der erste Gelenkpunkt unterhalb eines die Lagerfläche bildenden Ladebodens und vor einer hinteren Ladekante des Ladebodens liegt, der zweite Gelenkpunkt hinter dem ersten Gelenkpunkt, vorzugsweise hinter der Ladekante, liegt und die Ladefläche der Plattform unterhalb des zweiten Gelenkpunkts und oberhalb des ersten Gelenkpunkts liegt.

Erfindungsgemäß ist kein besonderes Heckabschlußprofil erforderlich, vielmehr kann z.B. ein 100 x 50-Rechteckrohr entweder in den Aufbau integriert oder dahintergesetzt werden, welches gegebenenfalls auch die hintere Ladekante der Ladefläche bilden kann. Der untere Parallelogrammpunkt bildet dabei den ersten und der obere Parallelogrammpunkt den zweiten Gelenkpunkt. In der oberen Arbeitsstellung der Plattform ist der obere Parallelogrammpunkt (zweite Gelenkpunkt) wesentlich über das Ladebodenniveau hinausgefahren. Bei Ausführungsformen, bei denen die Ladekante gleichzeitig Ende des Laderaums ist, bedingt dies, daß die maximale Plattformbreite immer geringer sein muß als die lichte Portalbreite des Ladeaufbaus.

Bei ganz besonderes bevorzugten Ausführungsformen der Erfindung greift in der oberen Arbeitsstellung der Plattform der Zuglenker und/oder ein Anschlußkopf der Plattform, an dem die beiden Gelenkpunkte vorgesehen sind, um die Ladekante insbesondere von außen herum. Dadurch ist es insbesondere möglich, die erfindungsgemäße Hubladebühne unter Beibehaltung der Ladekante des Ladeaufbaus unterhalb des Ladeaufbaus anzuordnen, was das Nachrüsten eines Fahrzeugs mit einer faltbaren Hubladebühne wesentlich vereinfacht. Bei isolierten Ladeaufbauten ist der Zuglenker so konstruiert, daß auch eine vorhandene, z.B. 125 mm dicke Isolierung bis hinten zur Ladekante hin erhalten bleiben kann.

Als vorteilhafte Weiterbildung dieser Ausführungsform ist vorgesehen, daß der Zuglenker und/oder der Anschlußkopf zum Umgreifen der Ladekante ausgekröpft sind.

Von besonderem Vorteil ist es, wenn der Zuglenker in Zugrichtung vorgespannt, insbesondere federbelastet ist, um dadurch den Faltvorgang der Plattform, insbesondere das manuelle Falten und Verschwenken, zu unterstützen.

Damit der über die Plattform mit der Hubschwinge bzw. einem Tragarm verbundene Zuglenker beim Anheben des Plattformpakets auf einem festen Radius um den ersten Gelenkpunkt verschwenken kann, ist der Zuglenker in Zugrichtung längenverstellbar, insbesondere teleskopierbar. Vorzugsweise ist dabei seine maximale Länge einstellbar, um so eine individuelle Vorspannung und Neigung der Plattform vorgeben zu können.

Um das Einfalten des Plattformpakets zu vereinfachen, ist in einer weiteren Ausführungsform, die erfindungsgemäß auch in Alleinstellung vorgesehen sein kann, der zweite Gelenkpunkt in einer Steuerkurve der Plattform geführt und wandert beim Verschwenken der Plattform der Drehpunkt des in Zugrichtung gespannten, insbesondere federbelasteten Zuglenkers vom einen Ende der Steuerkurve zum anderen Ende unter Beibehaltung eines wirksamen Hebels zum ersten Gelenkpunkt.

Eine andere Ausführungsform, die erfindungsgemäß ebenfalls auch in Alleinstellung vorgesehen sein kann, ist dadurch gekennzeichnet, daß die Hubschwinge und ein die Hubschwinge anhebender, unterhalb der Hubschwinge angeordneter Hubzylinder an einem Tragprofil der Hubladebühne über eine ihrerseits am Tragprofil schwenkbar gehaltene Gelenkkonsole schwenkbar gelagert sind.

Dabei liegt bevorzugt der Drehpunkt der Gelenkkonsole zwischen dem Drehpunkt der Hubschwinge und dem Drehpunkt des Hubzylinders.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: in einer Seitenansicht die erfindungsgemäße Hubladebühne mit einer Plattform, die sich in einer angehobenen oberen Arbeitsstellung befindet;
- Fig. 2: die Hubladebühne mit ihrer in eine untere Arbeitsstellung abgesenkten Plattform;
- Fig. 3: die Hubladebühne mit abgesenkter Plattform, wobei durch Verkippen der Plattform auch ihre Plattformspitze auf den Boden abgesenkt ist; und
- Fign. 4 bis 7: das Einfalten der Plattform aus ihrer in Fig. 2 gezeigten unteren Arbeitsstellung durch Umlegen und Verschwenken der Plattform in eine Ruhestellung unterhalb eines Ladeaufbaus.

In den Figuren ist mit 1 eine faltbare Hubladebühne bezeichnet, die mit Hilfe eines rohrförmigen Tragprofils 2 unterhalb eines Aufbaubodens 3 eines Fahrzeugs gehalten ist.

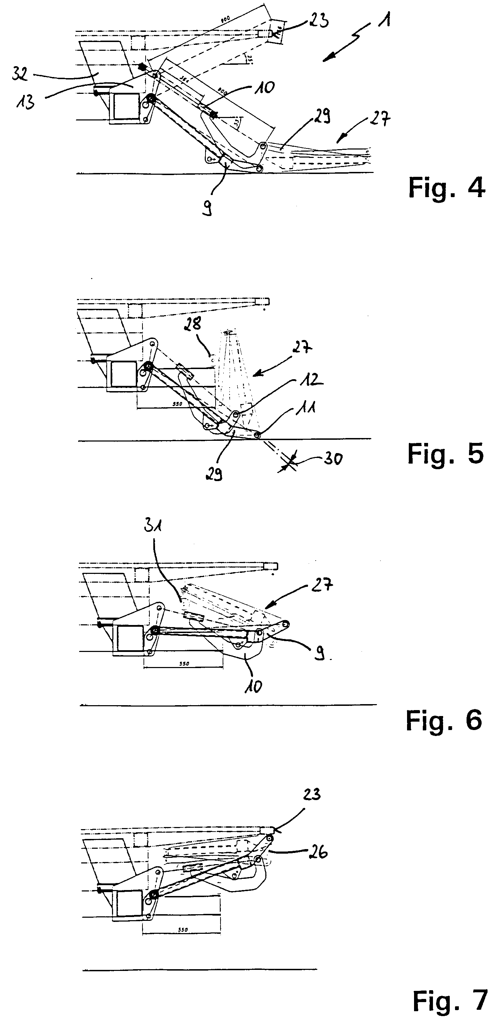

Eine Plattform 4 der Hubladebühne 1 ist mittels eines Parallelogrammantriebs 5 aus ihrer unteren Arbeitsstellung, in welcher sie auf dem Erdboden 6 aufsetzt, in ihre obere Arbeitsstellung, in welcher ihre Ladefläche 7 mit der Ladefläche 8 des Aufbaubodens 3 bündig ist, anhebbar. Der Parallelogrammantrieb 5 umfaßt eine Hubschwinge 9 in der unteren Parallelogrammhälfte und einen teleskopierbaren Zuglenker 10 (Fig. 4) in der oberen Parallelogrammhälfte, wobei die Plattform 4 an der Hubschwinge 9 in dem unteren Parallelogrammpunkt (erster Gelenkpunkt) 11 und an dem Zuglenker 10 in dem oberen Parallelogrammpunkt (zweiter Gelenkpunkt) 12 schwenkbar gehalten ist.

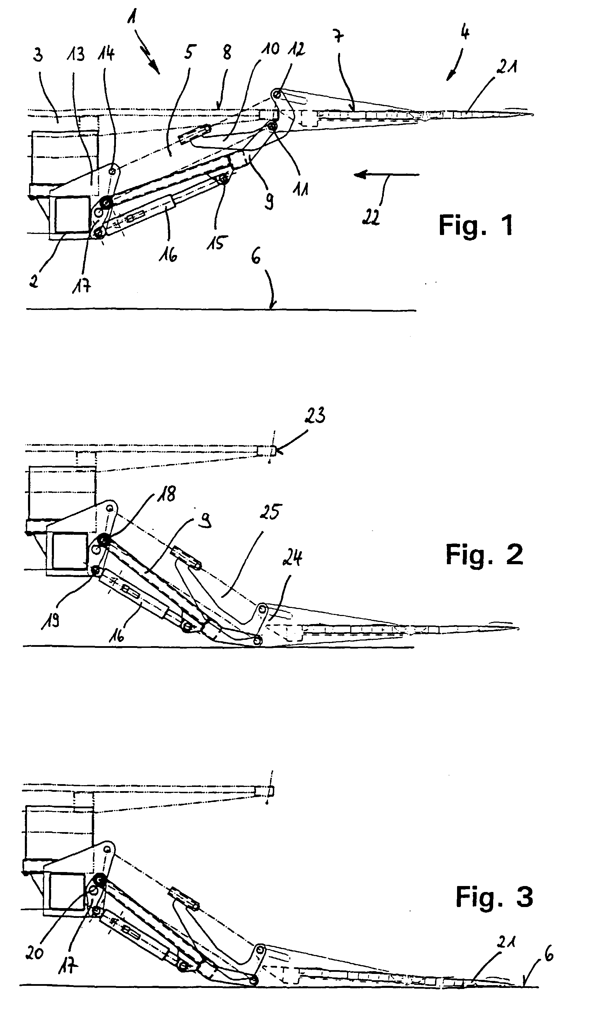

Der Zuglenker 10 ist an einem Tragelement 13 des Tragprofils 2 bei 14 angelenkt, während die Hubschwinge 9 und ein die Hubschwinge 9 anhebender, an ihrer Unterseite bei 15 angelenkter Hubzylinder 16 über eine Gelenkkonsole 17 gelagert sind. Die jeweiligen Drehpunkte der Hubschwinge 9 und des Hubzylinders 17 sind in Fig. 2 mit 18 bzw. 19 bezeichnet. Die Gelenkkonsole 17 ist ihrerseits zwischen zwei Tragelementen 13 um den Drehpunkt 20 schwenkbar gelagert und dient dem Verkippen der abgesenkten Plattform 4 um etwa 4°, damit auch ihre Plattformspitze 21 auf dem Erdboden 6 aufsetzt (Fig. 3). Der Drehpunkt 20 der Gelenkkonsole 17 liegt dabei zwischen dem Drehpunkt 18 der Hubschwinge 9 und dem Drehpunkt 19 des Hubzylinders 16.

In der oberen Arbeitsstellung der Plattform 4 (Fig. 1) liegt der untere Parallelogrammpunkt 11 unterhalb des die Lagerfläche 8 bildenden Ladebodens 3 und, gesehen in Vorwärtsfahrtrichtung 22 des Fahrzeugs, vor dessen hinterer Ladekante 23, während der obere Parallelogrammpunkt 12 hinter dem ersten Parallelogrammpunkt 11 und vorzugsweise noch hinter der Ladekante 23 liegt. Weiterhin befindet sich die Ladefläche 7 der Plattform 4 unterhalb des oberen Parallelogrammpunkts 12 und oberhalb des unteren Parallelogrammpunkts 11, d.h. zwischen beiden Parallelogrammpunkten 11 und 12. Dabei greifen in der oberen Arbeitsstellung der Zuglenker 10 und ein Anschlußkopf 24, mittels dem die Plattform 4 an den beiden Parallelogrammpunkten 11, 12 angelenkt ist, um die Ladekante 23 und den hinteren Bereich des Aufbaubodens 3 von außen herum. Dazu sind sowohl der Zuglenker 10 im Bereich 25 (Fig. 2) als auch der Anschlußkopf 24 im Bereich 26 (Fig. 7) entsprechend ausgekröpft.

Die Fign. 4 bis 7 zeigen das Einfalten der Hubladebühne 1 ausgehend von der in Fig. 2 gezeigten unteren Arbeitsstellung bis zur Fahrtsituation (Fig. 7) an einem nicht isolierten Aufbauboden 3, dessen hintere Ladekante 23 durch ein Rechteckrohr gebildet ist.

In Fig. 4 ist die Plattformspitze 21 bereits manuell zu einem Plattformpaket 27 umgelegt, welches dann um den ersten Gelenkpunkt 11, d.h. um den unteren Parallelogrammpunkt der Hubschwinge 9, in die in Fig. 5 gezeigte Stellung in Anlage an eine erste Rolle 28 manuell weitergeschwenkt und gefaltet wird. Dabei wird der Faltvorgang durch eine im Zuglenker 10 integrierte Zugfeder (nicht dargestellt) unterstützt. Um das Einfalten des Plattformpakets 27 zu vereinfachen, gleitet dabei der Zuglenker 10, der immer noch unter Federspannung der Zugfeder steht, in einer Steuerkurve 29 im Anschlußkopf 24 nach oben und zwar derart, daß beim Verschwenken des Plattformpakets 27 der Gelenkpunkt des federbelasteten Zuglenkers 10 zum anderen Ende der Steuerkurve 29 unter Beibehaltung eines wirksamen Hebels 30 zum ersten Gelenkpunkt 11 wandert.

Durch Betätigen der Funktion "Heben der Plattform" wird über den dazu vorgesehenen Parallelogrammantrieb 5 das gesamte Plattformpaket 27 (Fig. 6) angehoben, weiter verschwenkt und durch Eigengewicht, Federkraft und in Auflage zunächst auf der ersten Rolle 28 und dann auf einer zweiten Rolle 31 in die Fahrt- oder Ruhestellung unter das Niveau der Ladefläche gefaltet (Fig. 7). In der Fahrtstellung ragt kein Bauteil über die das Fahrzeugende bildende hintere Ladekante 23 hinaus.

Indem die das Tragprofil 2 tragenden Aufhängeplatten 32, wie in den Fign. 4 bis 7 gezeigt ist, im Gegensatz zur rechtwinkligen Ausführung in den Fign. 1 bis 3 schräg ausgeführt sind, kann das Plattformpaket 27 noch größer gestaltet werden. Der Zuglenker 10 ist in seiner maximalen Länge verstellbar, um eine individuelle Vorspannung der Plattform 4 einstellen zu können.

Der entscheidende Vorteil der Hubladebühne 1 wird mit dem umgreifenden Zuglenker 10 in Verbindung mit der Steuerkurve 29 erreicht. Diese ist in der Zeichnung lediglich vereinfacht als eine Gerade dargestellt, vorzugsweise jedoch als Kurve ausgeführt, damit der Zuglenker 10 beim Faltvorgang von der Position in Fig. 4 in die Position der Fig. 5 bei Erreichen eines bestimmten Faltwinkels in die andere Position geführt wird.

## Patentansprüche

1. Hubladebühne (1) für ein Fahrzeug, mit einer faltbaren Plattform (4), die entfaltet aus einer auf den Boden (6) aufsetzenden unteren Arbeitsstellung in eine bündig mit einer Ladefläche (8) des Fahrzeugs verlaufende obere Arbeitsstellung mittels eines Parallelogrammantriebs (5) anhebbar ist, welcher eine Hubschwinge (9) oder einen Tragarm in unterer Parallelogrammhälfte und einen Zuglenker (10) in oberer Parallelogrammhälfte aufweist, wobei die Plattform (4) an der Hubschwinge (9) in einem ersten Gelenkpunkt (11) und an dem Zuglenker (10) in einem zweiten Gelenkpunkt (12) schwenkbar gelagert ist und um den ersten Gelenkpunkt (11) gefaltet aus der unteren Arbeitsstellung durch Anheben der Hubschwinge (9) in eine Ruhestellung unter das Niveau der Ladefläche (8) schwenkbar ist,
dadurch gekennzeichnet,
daß in der oberen Arbeitsstellung der Plattform (4), gesehen in Vorwärtsfahrtrichtung (22) des Fahrzeugs,
- der erste Gelenkpunkt (11) unterhalb eines die Ladefläche (8) bildenden Ladebodens (3) und vor einer hinteren Ladekante (23) des Ladebodens (3) liegt,
- der zweite Gelenkpunkt (12) hinter dem ersten Gelenkpunkt (11), vorzugsweise hinter der Ladekante (23), liegt und
- die Ladefläche (7) der Plattform (4) unterhalb des zweiten Gelenkpunkts (12) und oberhalb des ersten Gelenkpunkts (11) liegt.

2. Hubladebühne nach Anspruch 1, dadurch gekennzeichnet, daß in der oberen Arbeitsstellung der Plattform (4) der Zuglenker (10) um die Ladekante (23) von außen herumgreift.

3. Hubladebühne nach Anspruch 1 oder 2, dadurch gekennzeichnet, daß in der oberen Arbeitsstellung ein Anschlußkopf (24) der Plattform (4), an dem die beiden Gelenkpunkte (11, 12) vorgesehen sind, um die Ladekante (23) herumgreift.

4. Hubladebühne nach Anspruch 2 oder 3, dadurch gekennzeichnet, daß der Zuglenker (10) und/oder der Anschlußkopf (24) zum Umgreifen der Ladekante (23) ausgekröpft sind.

5. Hubladebühne nach einem der vorhergehenden Ansprüche, dadurch gekennzeichnet, daß der Zuglenker (10) in Zugrichtung vorgespannt, insbesondere federbelastet ist.

6. Hubladebühne nach einem der vorhergehenden Ansprüche, dadurch gekennzeichnet, daß der Zuglenker (10) in Zugrichtung längenverstellbar, insbesondere teleskopierbar ist.

7. Hubladebühne entsprechend dem Oberbegriff von Patentanspruch 1, insbesondere nach einem der vorhergehenden Ansprüche,
dadurch gekennzeichnet,
daß der zweite Gelenkpunkt (12) in einer Steuerkurve (29) der Plattform (4) geführt ist und daß beim Verschwenken der Plattform (4) der Drehpunkt des in Zugrichtung gespannten, insbesondere federbelasteten Zuglenkers (10) vom einen Ende der Steuerkurve (29) zum anderen Ende wandert unter Beibehaltung eines wirksamen Hebels (30) zum ersten Gelenkpunkt (11).

8. Hubladebühne entsprechend dem Oberbegriff von Patentanspruch 1, insbesondere nach einem oder mehreren der vorhergehenden Ansprüche,
dadurch gekennzeichnet,
daß die Hubschwinge (9) und ein die Hubschwinge (9) anhebender, unterhalb der Hubschwinge (9) angeordneter Hubzylinder (16) an einem Tragprofil (2) der Hubladebühne (1) über eine ihrerseits am Tragprofil (2) schwenkbar gehaltene Gelenkkonsole (17) schwenkbar gelagert sind.

9. Hubladebühne nach Anspruch 8, dadurch gekennzeichnet, daß der Drehpunkt (20) der Gelenkkonsole (17) zwischen dem Drehpunkt (18) der Hubschwinge (9) und dem Drehpunkt (19) des Hubzylinders (16) liegt.
